Europäisches Patentamt

European Patent Office

Office européen des brevets

(19)

(11) **EP 0 599 708 B1**

(12) **FASCICULE DE BREVET EUROPEEN**

(45) Date de publication et mention
de la délivrance du brevet:
**17.07.1996 Bulletin 1996/29**

(51) Int. Cl.$^6$: **B60K 41/04**, F16H 61/20

(21) Numéro de dépôt: **93402813.5**

(22) Date de dépôt: **19.11.1993**

(54) **Dispositif de commande de débrayage à l'arrêt de transmission automatique**

Gerät zur Steuerung des Stillstands-Auskuppelns eines automatischen Getriebes

Device for controlling the clutch disengagement on stopping of an automatic transmission

(84) Etats contractants désignés:
**DE ES GB IT**

(30) Priorité: **20.11.1992 FR 9213944**

(43) Date de publication de la demande:
**01.06.1994 Bulletin 1994/22**

(73) Titulaire: **REGIE NATIONALE DES USINES RENAULT S.A.**
**F-92109 Boulogne Billancourt (FR)**

(72) Inventeurs:
• **Lauter, Jacques**
**F-78310 Maurepas (FR)**
• **Leorat, François**
**F-78000 Versailles (FR)**

(56) Documents cités:
**EP-A- 0 251 866**     **US-A- 4 046 032**

EP 0 599 708 B1

## Description

La présente invention se rapporte à la commande électrique de la pression d'alimentation d'un récepteur hydraulique, notamment pour l'embrayage d'entrée sur le premier rapport d'une boîte de vitesses automatique de véhicule automobile.

Pour la commande de ce type d'embrayage, on connaît des systèmes dits de débrayage à l'arrêt à commande électronique, tel celui décrit dans la publication FR-A-2 600 597 de la demanderesse, qui permettent de supprimer, sur un véhicule équipé d'une transmission automatique, la tendance spontanée à "ramper" à partir de l'arrêt, lorsque les circonstances de la conduite font considérer cette tendance comme indésirable.

La principale difficulté rencontrée dans la mise au point de tels systèmes se manifeste lors du redémarrage, lorsque le conducteur réappuie sur l'accélérateur et ouvre, de manière essentiellement variable, le papillon des gaz (moteur à cycle Beau de Rochas) ou le dispositif de dosage du gazole (moteur à cycle Diesel). En effet, il est très difficile de trouver des réglages donnant un résultat satisfaisant au point de vue du confort de démarrage, à la fois pour un démarrage avec un filet de gaz, et pour un démarrage "pied à fond". Les défauts se traduisent par un à-coup à l'accélération, inacceptable compte-tenu des standards de confort exigés des transmissions automatiques modernes.

Ces défauts s'expliquent par le fait que les systèmes de débrayage à l'arrêt connus à ce jour sont activés par la surveillance simultanée de conditions préétablies, notamment sur la vitesse du véhicule, la vitesse du moteur, la vitesse de sortie du convertisseur et la position angulaire $\alpha c$ de l'organe de dosage de carburant du moteur, par rapport à sa position de repos : en particulier, pour cette dernière, on impose le plus souvent la condition : $\alpha c = \alpha c$ au ralenti.

C'est précisément cette dernière condition qui est insuffisante pour assurer, dans toutes les circonstances, le confort recherché au démarrage. En effet, cette seule condition sur $\alpha c$ ne prend pas en compte:

- l'intérêt et l'agrément qu'il y a à pouvoir faire des manoeuvres au ralenti, précisément en exploitant le phénomène de "ramper" propre aux transmissions automatiques ; en effet, pour faire cesser le débrayage à l'arrêt, il faut $\alpha c > \alpha c$ ralenti, ce qui revient à appuyer de manière sensible sur l'accélérateur;

- l'inévitable temps de réponse au remplissage du vérin de l'embrayage d'entrée qui, bien que maintenu en position d'accostage, n'est pas à même de transmettre sans un certain délai, fût-il minime, le plein couple moteur lors d'un démarrage pied à fond ; par nature même, la mesure de $\alpha c$ ne permet aucune anticipation sur l'arrivée du couple, anticipation qui permettrait de pallier le temps de réponse de l'embrayage d'entrée.

On sait remédier aux inconvénients précités des systèmes de "débrayage à l'arrêt" connus, en substituant à la mesure de $\alpha c$, un contacteur dit de "pied appuyé", inséré sur la commande d'accélérateur. Les contacteurs connus à ce jour pour remplir cette fonction, tel celui décrit dans la publication FR-A-2600597 de la demanderesse déjà mentionnée, présentent une structure mécanique complexe, qui leur permet, certes, de répondre aux exigences fonctionnelles multiples -étanchéité, protection des contacts, faibles frottements, etc...-, mais au prix d'une fiabilité parfois insuffisante et d'un coût élevé.

La présente invention concerne un contacteur qui répond à toutes les exigences fonctionnelles imposées pour son insertion dans un dispositif de débrayage à l'arrêt, tout en faisant preuve d'une très grande fiabilité et en bénéficiant d'un coût particulièrement favorable.

Elle concerne un dispositif de commande de débrayage à l'arrêt de transmission automatique, comportant un contacteur électrique raccordé d'une part à la pédale d'accélérateur, et d'autre part à un organe de dosage du carburant. Ce dispositif est caractérisé en ce que la fermeture du contacteur autorise l'inhibition de la fonction de débrayage à l'arrêt, et en ce qu'elle est contrôlée par deux ressorts antagonistes, tarés de manière à fermer le contacteur lorsque la force d'appui de l'utilisateur sur la pédale d'accélérateur est significative, tout en restant inférieure à la force à partir de laquelle le dosage du carburant commence à augmenter au-delà du débit de ralenti.

Selon un mode de réalisation de l'invention, le contacteur comporte un corps cylindrique articulé sur la pédale d'accélérateur, et retenant élastiquement l'extrémité du câble d'accélérateur.

Selon un mode de réalisation de l'invention, l'extrémité du câble est retenue par un électro-aimant annulaire qui peut coulisser à l'intérieur du corps cylindrique, de façon à être appliqué contre une première extrémité du corps cylindrique, par le premier ressort tant que l'effort de traction sur le câble reste inférieur à la tare en place de celui-ci, et à s'éloigner de cette extrémité lorsque l'effort de traction dépasse cette tare.

Selon un mode de réalisation de l'invention, les éléments de contact du contacteur sont les contacts d'une ampoule relais, disposée à l'extérieur du corps cylindrique, de telle façon que le déplacement de l'électroaimant à l'écart de la première extrémité du corps cylindrique assure leur fermeture.

Selon un mode de réalisation de l'invention, le premier ressort est disposé entre l'électro-aimant et un élément assurant simultanément l'obturation du corps cylindrique à sa seconde extrémité, et le centrage du câble d'accélérateur.

L'invention sera mieux comprise à la lecture de la description suivante d'un mode de réalisation particulier de celle-ci, en liaison avec les dessins annexés, sur lesquels:

- la figure 1 représente schématiquement l'insertion d'un contacteur conforme à l'invention, dans la commande du papillon des gaz ou du levier de pompe d'injection par la pédale d'accélérateur d'un véhicule,

- la figure 2 représente le contacteur en position de repos, et

- la figure 3 représente le contacteur en position activée.

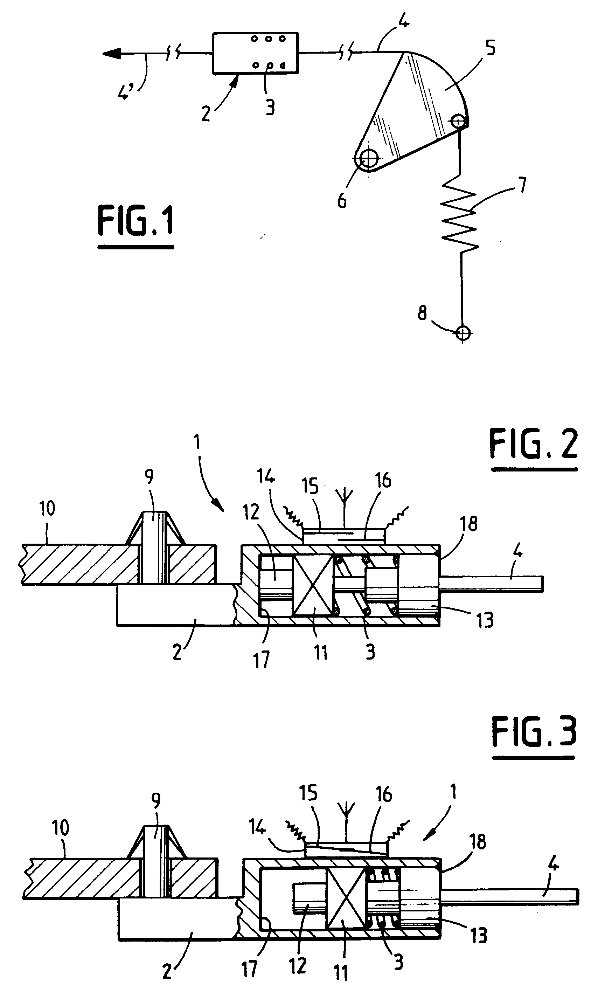

Sur la figure 1, on a représenté de façon schématique le corps cylindrique 2 d'un contacteur électrique 1, et un premier ressort 3, disposé à l'intérieur de celui-ci. Le contacteur 1 est raccordé par le câble d' accélérateur 4 à une came 5, assurant la commande du carburateur (non représenté). La came 5 pivote autour d'un premier point fixe 6 du moteur, et elle est raccordée par l'intermédiaire d'un second ressort 7 à l'organe de dosage du carburateur ou de la pompe d'injection. Par ailleurs, le contacteur 1 est relié à la commande d'accélération, non représentée. Cette liaison est illustrée par la flèche 4'.

En se reportant aux figures 2 et 3, on reconnaît le contacteur 1, son corps cylindrique 2, et le premier ressort 3. Le contacteur 1 est ici articulé de façon classique par un pivot 9, sur l'extrémité de la pédale d'accélérateur 10, de telle sorte que le corps cylindrique 2 reste constamment en ligne avec le câble d'accélérateur 4. Le câble 4 est en prise sur la came 5 (non reproduite) soumise à la traction antagoniste du second ressort 7, comme sur la figure 1. A l'intérieur du corps cylindrique 2, le câble 4 traverse un électro-aimant 11 pouvant coulisser à l'intérieur du corps cylindrique 2. L'extrémité du câble 4 est retenue par l'électro-aimant 11. Cette disposition permet au câble 4 d'entraîner l'électro-aimant 11 en réponse à un appui significatif de l'utilisateur sur la pédale 10. Le premier ressort 3 est disposé de l'autre côté de l'aimant 11. Il prend appui sur ce dernier et sur le centreur 13, faisant également office d'obturateur du corps cylindrique 2.

Une ampoule relais 14, par exemple une ampoule "REED", est fixée à l'extérieur du corps 2 du contacteur 1, de telle manière que, lorsque l'extrémité 12 du câble 4 est en appui contre la première extrémité 17 du corps cylindrique 2 - c'est à dire lorsque l'effort de traction de la pédale 10 sur le câble 4 est inférieure à la tare en place du premier ressort 3 -, l'électro-aimant 11 est éloigné des contacts 16, 17 de l'ampoule "REED" 14, qui restent en position ouverte (figure 2). Le contacteur 1 est alors au repos. La fonction débrayage à l'arrêt de la transmission peut être activée. En revanche, lorsque la traction sur le câble 4 excède la tare en place du ressort 3, en raison d'une action sur la pédale 10 significative, mais toutefois insuffisante pour faire pivoter la came 5, à l'encontre de la traction exercée sur celle-ci par le second ressort 7, l'électro-aimant 11 vient se placer sous les contacts 15, 16 du contacteur 14. Ces derniers sont alors rapprochés. Le contacteur 1 est fermé (figure 3), et la fonction de débrayage à l'arrêt est inhibée. L'utilisateur peut alors bénéficier de l'effet de "ramper" de la transmission automatique, notamment pour effectuer ses manoeuvres de parking.

Bien entendu, le tarage relatif des ressorts 3, 7, antagonistes dans leur action sur l'électro-aimant 11, doit être établi de façon à autoriser le passage du contacteur 1 en position fermée, avant que le papillon d'admission des gaz ou le levier de la pompe d'injection contrôlés par la came 5 n'aient décollé de leur position de repos, ce qui permet au dispositif de commande de l'invention de différencier, en situation de ralenti du moteur, les états de "pied appuyé" ou de "pied non appuyé" sur l'accélérateur.

inconvénients précités des contacteurs de débrayage à l'arrêt connus, tout en offrant une performance supérieure, notamment en terme de frottements parasites. Elle est particulièrement simple à mettre en oeuvre, puisqu'elle ne nécessite qu'un nombre très réduit de pièces constitutives : la fiabilité de la commande de débrayage à l'arrêt est ainsi considérablement accrue. Enfin, il faut souligner que le prix de revient de ce contacteur est très bas, alors même que les frottements parasites dont il est le siège sont maintenus à un niveau particulièrement faible.

## Revendications

1. Dispositif de commande de débrayage à l'arrêt de transmission automatique, comportant un contacteur électrique (1), raccordé d'une part à la pédale d'accélérateur (10), et d'autre part à un organe (5) de dosage du carburant, caractérisé en ce que la fermeture du contacteur (1) assure l'inhibition de la fonction de débrayage à l'arrêt, et en ce qu'elle est contrôlée par deux ressorts antagonistes (3,7), tarés de manière à fermer le contacteur (1), lorsque la force d'appui de l'utilisateur sur la pédale d'accélérateur (10) est significative, tout en restant inférieure à la force à partir de laquelle l'organe (5) commence à augmenter le dosage du carburant au-delà du débit au ralenti.

2. Dispositif de commande selon la revendication 1, caractérisé en ce que le contacteur (1) comporte un corps cylindrique (2), articulé sur la pédale d'accélérateur (10), et retenant élastiquement l'extrémité (12) du câble d'accélérateur (4).

3. Dispositif de commande selon les revendications 1 ou 2, caractérisé en ce que l'extrémité (12) du câble (4) est retenue par un électro-aimant annulaire (11), qui peut coulisser à l'intérieur du corps cylindrique (2), de façon à être appliqué contre une première extrémité (17) du corps cylindrique (2) par le premier ressort (3), tant que l'effort de traction de la pédale (10) sur le câble (4) reste inférieure à la tare en place de celui-ci, et à s'éloigner de cette première extrémité (17) lorsque l'effort de traction dépasse cette tare.

4. Dispositif de commande selon la revendication 2, caractérisé en ce que les éléments de contact (15, 16) du contacteur (1) sont les contacts d'une ampoule relais (14), disposée à l'extérieur du corps cylindrique (2), de façon telle que le déplacement de l'électro-aimant (11), à l'écart de la première extrémité (17) du corps cylindrique (2), assure leur fermeture.

5. Dispositif de commande selon les revendications 3 ou 4, caractérisé en ce que le premier ressort (3) prend appui contre l'électro-aimant (11) et un élément (13) assurant simultanément l'obturation du corps cylindrique(2) à sa seconde extrémité (18), et le centrage du câble d'accélérateur (4).

## Claims

1. Device for the control of declutching at stopping of an automatic transmission, comprising an electrical contactor (1) joined on the one hand to the accelerator pedal (10) and on the other hand to a member (5) for fuel metering, characterised in that the closure of the contactor (1) ensures the blockage of the declutching at stopping function, and in that it is controlled by two counter springs (3, 7) counterbalanced in a manner such as to close the contactor (1) when the pushing down force used by the user on the accelerator pedal (10) is significant, while remaining less than the force as a result of which the organ (5) starts to increase the metering of the fuel above the rate used when idling.

2. Control device according to claim 1, characterised in that the contactor (1) comprises a cylindrical body (2) articulated on the accelerator pedal (10) and elastically retaining the extremity (12) of the accelerator cable (4).

3. Control device according to claims 1 or 2, characterised in that the extremity (12) of the cable (4) is retained by an annular electromagnet (11) which can slide inside the cylindrical body (2) such as to be applied against a first extremity (17) of the cylindrical body (2) by the first spring (3) as long as the traction effort of the pedal (10) on the cable (4) remains less than the counterbalance in place thereof, and to move away from this first extremity (17) when the traction effort exceeds this counterbalance.

4. Control device according to claim 2, characterised in that the contact elements (15, 16) of the contactor (1) are the contacts of a relay unit (14) disposed on the exterior of the cylindrical body (2) such that the displacement of the electromagnet (11) away from the first extremity (17) of the cylindrical body (2) ensures their closure.

5. Control device according to claims 3 or 4, characterised in that the first spring (3) bears against the electromagnet (11) and an element (3) ensuring at the same time the sealing of the cylindrical body (2) at its second extremity (18) and the centring of the accelerator cable (4).

## Patentansprüche

1. Vorrichtung zur Steuerung des Auskuppelns bei Stillstand eines automatischen Getriebes, mit einem elektrischen Schalter (1), der einerseits mit dem Gaspedal (10) und der andererseits mit einem Kraftstoffdosiergerät (5) verbunden ist, dadurch gekennzeichnet, daß das Schließen des Schalters (1) die Nein-Schaltung der Funktion des Auskuppelns bei Stillstand gewährleistet und daß sie durch zwei entgegengesetzt wirkende Federn (3, 7) gesteuert wird, die derart eingestellt sind, daß der Schalter (1) geschlossen wird, wenn die Kraft, mit der der Fahrer das Gaspedal (10) beaufschlagt, erheblich, jedoch geringer ist, als die Kraft, ab der das Gerät (5) die Kraftstoffdosierung über die Leerlaufmenge hinaus zu erhöhen beginnt.

2. Vorrichtung zur Steuerung nach Anspruch 1, dadurch gekennzeichnet, daß der Schalter (1) einen zylindrischen Körper (2) aufweist, der am Gaspedal (10) angelenkt ist und der elastisch das Ende (12) des Gasseils (4) festhält.

3. Vorrichtung zur Steuerung nach Ansprüchen 1 oder 2, dadurch gekennzeichnet, daß das Ende (12) des Kabels (4) durch einen ringförmigen Elektromagneten (11) festgehalten wird, der im Inneren des zylindrischen Körpers (2) gleiten kann, derart, daß er an einem ersten Ende (17) des zylindrischen Körpers (2) mittels der ersten Feder (3) anliegt, während die Zugkraft des Pedales (10) am Kabel (4) kleiner ist als der voreingestellte Wert an seiner Stelle und sich von diesem ersten Ende (17) entfernt, wenn die Zugkraft diesen voreingestellten Wert überschreitet.

4. Vorrichtung zur Steuerung nach Anspruch 2, dadurch gekennzeichnet, daß die Kontaktteile (15, 16) des Schalters (1) die Kontakte eines langgestreckten Relais (14) sind, das an der Außenseite des zylindrischen Körpers (2) derart angeordnet ist, daß eine Verschiebung des Elektromagneten (11) vom ersten Ende (17) des zylindrischen Körpers weg ihr Schließen gewährleistet.

5. Vorrichtung nach Ansprüchen 3 oder 4, dadurch gekennzeichnet, daß sich die erste Feder (3) auf dem Elektromagneten (11) und einem Bauteil (13) abstützt und zugleich das Verschließen des zylindrischen Körpers (2) an seinem zweiten Ende (18) sowie die Zentrierung des Gasseiles (4) gewährleistet.

**FIG.1**

**FIG.2**

**FIG.3**